# EUROPÄISCHE PATENTANMELDUNG

(11) **EP 1 584 519 A1**
(43) Veröffentlichungstag der Anmeldung: **12.10.2005**
(21) Anmeldenummer: 05004997.2
(22) Anmeldetag: 08.03.2005
(51) Int. Cl.: B60R 21/01

(54) **Verfahren zum Steuern von Insassenrückhaltemitteln in einem Fahrzeug**

(30) Priorität: 08.04.2004 DE 102004018077; 01.06.2004 DE 102004026638
(71) Anmelder: DaimlerChrysler AG, 70567 Stuttgart (DE)
(72) Erfinder: Dickmann, Jürgen, 89079 Ulm (DE); Prasanna, Rajan, Nanganallur Chennai 600 061 (IN)

(57) **Zusammenfassung**

Die Erfindung betrifft ein Verfahren zum Steuern von Insassenrückhaltemitteln in einem Fahrzeug, mit wenigstens zwei Sensoren (10, 10') zum zyklischen Erfassen einer Fahrzeugumgebung, deren Messdaten zu Segmenten zusammenfassbar und potentiellen Kollisionsobjekten (O) zugeordnet sind, und bei dem Tracks für die Objekte (O) ermittelt werden können, die zum Steuern eines Precrash-Verhaltens der Insassenrückhaltemittel heranziehbar sind, dadurch gekennzeichnet, dass Segmente aus Messungen überlappender Messstrahlen (M1 - M4) mit darin festgestellten Objekten (O) gebildet werden.

## Beschreibung

Die Erfindung betrifft ein Verfahren zum Steuern von Insassenrückhaltemitteln in einem Fahrzeug nach Anspruch 1, mit wenigstens zwei Sensoren zum zyklischen Erfassen einer Fahrzeugumgebung, deren Messdaten zu Segmenten zusammenfassbar und potentiellen Kollisionsobjekten zugeordnet sind, und bei dem Tracks für die Objekte ermittelt werden können, die zum Steuern eines Precrash-Verhaltens der Insassenrückhaltemittel heranziehbar sind.

Verfahren dieser Art setzen eine Sensorik voraus, die eine schnelle und verlässliche Erfassung der Fahrzeugumgebung ermöglicht. Erst auf Basis entsprechender Messdaten kann ein effizienter Einsatz der Sicherheitssysteme im (Pre)Crashfall gewährleistet werden. Die erforderliche Sensorik stellt deshalb auch einen erheblichen Kostenfaktor dar.

Die japanische Patentschrift JP 08-159756 A1 offenbart einen Detektor für Objekte mit einer Mehrzahl von Photodetektoren, die an Vorder- und Rückseite sowie den jeweiligen Seiten eines Fahrzeugs angeordnet sind. Aus den Messungen reflektierter Messstrahlen wird auf Basis des Triangulierungsprinzips eine Entfernung zu dem Objekt ermittelt. Der Detektor ist dabei für industriell genutzte (Förder)-Fahrzeuge mit geringen Geschwindigkeiten und entsprechend kurzen Bremswegen ausgelegt. Demgemäß ist auch die Erfassungsweite des Detektors auf kurze Distanzen und geringe Auflösungen beschränkt, was sich in weiten Überlappungsbereichen und einer schräg nach vorn unten gerichteten Erfassungsgeometrie ausdrückt. Konkrete Angaben zum Verarbeitungsablauf der optischen Messdaten sind dem Dokument nicht entnehmbar.

Die deutsche Offenlegungsschrift DE 199 49 409 A1 beschreibt ein Verfahren und eine Vorrichtung zur Objektdetektierung mit Radarsensoren. In deren Überlappungsbereich werden Entfernungen zu einem Objekt auf Basis des Triangulierungsprinzips ermittelt, wodurch sich die Zahl eingesetzter Sensoren verringert. Die eingesetzten Sensoren sind jedoch entsprechend teuer.

Die deutsche Offenlegungsschrift DE 101 60 299 A1 zeigt ein Verfahren und ein System zum Detektieren von Objekten mit Radarsensoren. Zum Bestimmen von Objektparametern wird ein Klassifikationsverfahren angewandt, wodurch sich mehrere unabhängig voneinander detektierte Reflexionszentren einem Objekt zuordnen lassen. Auch hier sind die eingesetzten Sensoren entsprechend teuer.

Es ist Aufgabe der vorliegenden Erfindung, ein Verfahren der eingangs genannten Art bereitzustellen, das eine schnelle und verlässliche Erfassung und Verfolgung potentieller Kollisionsobjekte mit einfachen und kostengünstigen Mitteln zulässt.

Diese Aufgabe wird durch ein Verfahren gelöst, bei dem die Segmente aus Messungen überlappender Messstrahlen gebildet werden, die sich von einer Fahrzeugvorderseite ausgehend in etwa horizontal fächerförmig erstrecken, und in denen potentielle Kollisionsobjekte festgestellt sind.

Da einerseits zum Erfassen potentieller Kollisionsobjekte eine Segmentierung der Messdaten vorgenommen werden muss, andererseits aber ein derartiger Sensor keine Winkelauflösung innerhalb seines Messstrahls ermöglicht und die Messstrahlen relativ breit sind, wird die Lokalisierung eines Objekts und die Größenabschätzung üblicherweise schwierig. Weist z.B. ein Sensor eine Messstrahlbreite von 20° auf und eine Entfernungsmessung liegt bei 7 m, kann die Entfernung an jedem Punkt in der Messstrahlbreite bei 7 m aufgetreten sein, und die Objektgröße kann einen Wert zwischen wenigen Zentimetern und 1,3 m haben.

Eine Möglichkeit des Segmentierens und Lokalisierens des Objekts besteht darin, das Triangulierungsverfahren anzuwenden. Die Triangulierung verwendet zwei unabhängige Entfernungsmessungen zum Lokalisieren des Objekts. Der Nachteil dieses Verfahrens ist der, dass sich zwar Punktziele gut erfassen lassen, jedoch nicht breite oder verteilte Objekte, und in manchen Fällen auch Scheinobjekte gemeldet werden.

Ein wesentlicher Punkt der vorliegenden Erfindung besteht deshalb darin, eine Segmentierung von Messdaten überlappender Messstrahlen vorzunehmen. Bekannte Parameter der jeweiligen Sensoren umfassen dabei die Messstrahlbreite, die Nummer des Messstrahls (im folgenden Messstrahlnummer genannt), die Position am Fahrzeug, den Ausrichtungswinkel hinsichtlich der Fahrzeugachse usw.. Die Nutzung des Überlappungsmusters der Messstrahlen lässt damit den Einsatz beliebiger, einfachster Entfernungssensoren zu.

Vorteilhafte Weiterbildungen des Verfahrens sind in den Unteransprüchen 2 bis 15 angegeben.

Von Vorteil ist es, wenn den Segmenten triangulierte Messungen von Sensoren zugeordnet werden, in deren überlappenden Messstrahlen potentielle Kollisionsobjekte festgestellt sind. Damit kann eine Liste eindeutig identifizierter Objekte vor dem Fahrzeug erzeugt werden. Messen zwei Messstrahlen zweier verschiedener Sensoren ein Ziel, und liegen die Messungen in einem Überlappungsbereich, womit eine hohe Wahrscheinlichkeit für ein gleiches Ziel besteht, wird das Triangulierungsverfahren zum Berechnen der erwarteten Objektposition angewandt. Die Triangulierung wird dabei für alle Messungen potentieller Kollisionsobjekte und für alle möglichen Überlappungsmuster der Messstrahlen durchgeführt.

Bevorzugt ist es, wenn die Radialgeschwindigkeiten eines Objekts zum Feststellen einer Triangulierbarkeit herangezogen werden. Damit wird sichergestellt, dass es sich hier um das gleiche Objekt handelt und nicht um eine Gruppe von verschiedenen Objekten.

Ein Vorteil entsteht, wenn die Segmente mit kombinierten Messungen einzelner Sensoren gruppiert werden, in deren angrenzenden Messstrahlen gemeinsame potentielle Kollisionsobjekte (O) festgestellt sind. Damit werden auch Messungen von Objekten erfasst, die nicht in das Überlappungsmuster des Messstrahlen fallen, sondern z.B. in benachbarten Messstrahlen eines Sensors auftreten.

Bevorzugt ist es dabei, wenn die Kombinationskriterien eine Entfernungsinformation, eine Radialgeschwindigkeit und/oder eine Messstrahlnummer umfassen. Damit lassen sich die Messungen angrenzender Messstrahlen unter verschiedenen Aspekten so gruppieren, das eine sichere Erkennung gemeinsamer Objekte gewährleistet ist.

Ein weiterer Vorteil entsteht, wenn die Segmente mit isolierten Messungen einzelner Sensoren gruppiert werden, in deren Messstrahlen einzelne potentielle Kollisionsobjekte festgestellt sind. Damit sind auch Objekte erfassbar, die nur in isolierten Messstrahlen erfasst werden, aber zu einem z.B. aus triangulierten und kombinierten Messungen bekannten Objekt gehören.

Bevorzugt ist es, wenn die Segmentierungskriterien eine Objektposition, eine Annäherungsgeschwindigkeit, eine Objektgröße und/oder ein Strahlüberlappungsmuster umfassen. Damit lassen sich triangulierte, kombinierte und isolierte Messungen in einem Segment unter verschiedenen Aspekten so gruppieren, dass ihre sichere Zuordnung zu einem Objekt gewährleistet ist. Ein Parametersatz für Objektposition (x, y), Annäherungsgeschwindigkeit (Vx, Vy), mögliche Objektgröße (linke und rechte Position) usw. werden in jedem Erfassungszyklus neu berechnet. Andere Möglichkeiten zum Segmentieren und Kombinieren der Messungen können auch in der Anwendung von Netzbelegungsverfahren, Kombinationsverfahren angrenzender Messstrahlen und Musterklassifikationsverfahren bestehen.

Von Vorteil ist es, wenn ein Unsicherheitsbereich, der sich beim Bestimmen einer Objektposition ergibt, als potentielle Objektgröße angenommen wird. Damit ist eine anfängliche Abschätzung der Objektgröße ohne weiteren Aufwand möglich. Der Unsicherheitsbereich kann zusätzlich zu den triangulierten Positionswerten (x, y) bestimmt werden. Typischerweise wird eine potentielle Objektgröße aus der Breite der betrachteten Messstrahlen abgeleitet. Die Objektgröße wird unter Nutzung eines Netzbelegungsverfahrens zyklisch neu bestimmt, und diese Schätzung über mehrere Erfassungszyklen verbessert. Damit ist ein Überlappungsbereich des Objekts mit dem Fahrzeug sicher erkennbar, der zum frühzeitigen Auslösen der Insassenrückhaltemittel führt.

Von Vorteil ist es, wenn die Tracks eine Annäherungsgeschwindigkeit zum Erkennen und Verfolgen statischer und dynamischer Objekte umfassen. Dadurch wird insbesondere die Verfolgung von sich bewegenden Objekten und die Abschätzung von deren Crashrelevanz möglich. Zum Unterscheiden beider Objekttypen wird eine Annäherungsgeschwindigkeit an das Fahrzeug und/oder eine geschätzte Größe des Objekts herangezogen. Anders als bei Radarsensoren fehlt bei optischen Sensoren dabei eine Doppler-Geschwindigkeitsinformation. Die Annäherungsgeschwindigkeit wird deshalb allein aus den Entfernungsmessungen geschätzt.

Bevorzugt ist es deshalb, wenn eine Annäherungsgeschwindigkeit eines Objekts aus wenigstens zwei seiner Radialgeschwindigkeiten bestimmt wird. Dem liegen wenigstens zwei Entfernungsmessungen zugrunde, womit die Annäherungsgeschwindigkeit entsprechend genau wird.

Ein weiterer Vorteil entsteht, wenn den Tracks ein Status zugeordnet werden kann, der deren weitere Verarbeitung bestimmt. Ein Status der Tracks kann typischerweise FREE, INITIAL, TENTATIVE, CONFIRMED, MISSED oder DEAD sein. Abhängig von dem jeweiligen Status der Tracks ist ihre Verarbeitung damit steuerbar. So werden unterschiedliche Kriterien (Annäherungsgeschwindigkeit, Euklidische Distanz, Messstrahlnummer usw.) für jeden Status genutzt, um die Messungen aufzuteilen, was die Erfassungssicherheit potentieller Kollisionsobjekte durch den Algorithmus erhöht.

Bevorzugt ist es, wenn der Track mit einem Status CONFIRMED zuerst verarbeitet wird. Dadurch lässt sich eine priorisierte Verarbeitung von Tracks vornehmen, die in besonderem Maß crashrelevant sind, wodurch wiederum ein der Situation angepasstes Precrash-Verhalten der Insassenrückhaltemittel beschleunigt erreichbar ist. Die Reaktionszeit des Algorithmus wird damit beschleunigt.

Besonders bevorzugt ist es, wenn eine Statusänderung wohldefinierten Übertragungsregeln folgt. Dadurch wird ein fehlender oder falscher Alarm ausgeschlossen, der sich z.B. durch falsche Statusdeklaration ergeben könnte. Die Zuverlässigkeit des Verfahrens wird dadurch erhöht.

Bevorzugt ist es, wenn eine zukünftige Objektposition durch Anwendung adaptiver Filterverfahren bestimmt wird. Dazu werden die segmentierten und isolierten Messungen Tracks zugeordnet. Tracks stellen dabei potentielle Kollisionsobjekte dar, wobei ein großes Objekt auch durch mehrere Tracks repräsentiert werden kann. Aus den segmentierten Messungen der Tracks wird der geometrische Schwerpunkt des Objekts ermittelt. Diese geometrische Position wird geglättet und die nächste Trackposition und Trackgeschwindigkeit unter Verwendung adaptiver Filterverfahren bestimmt. Eine Track-Datenstruktur besteht dabei aus einer Schätzung der Objektposition (x, y) in jedem Zyklus, einer Schätzung der Annäherungsgeschwindigkeit (Vx, Vy), einer Schätzung der objektgröße und crashrelevanter Information. Abhängig von der geschätzten Crashinformation steuert der Algorithmus die entsprechenden Insassenrückhaltemittel an.

Von Vorteil ist es, wen zum Steuern eines Precrash-Verhaltens von Insassenrückhaltemitteln für jedes Objekt Informationen bereitgestellt werden, die eine Annäherungsgeschwindigkeit, eine Objektposition, einen zeitlichen Kollisionsabstand, eine Objektgröße und/oder eine Überlappung umfassen. Da Precrash-Anwendungen Szenarien hoher Dynamik umfassen, werden den aktuellen Messungen höhere Priorität beigemessen als den vergangenen Messungen (Historie). Die Tracks werden so früh wie möglich, d. h. in sehr wenigen Messzyklen angekündigt und die aktuelle Statusabschätzung ist auf die unmittelbare Vergangenheit beschränkt. Dadurch unterscheiden sich Precrash- von Komfortanwendungen wie ACC, bei dem die Tracks relativ langsam deklariert werden und Schätzungen hinsichtlich eines weiten Bereichs vergangener Messungen hochgradig geglättet sind. Von einem ACC-Prozessor verarbeitete und für das Precrash-Verhalten relevante Objektinformationen können die Leistungsfähigkeit des Precrash-Algorithmus weiter erhöhen. Dadurch liegt bereits in wenigen Erfassungszyklen des Sensors eine schnelle und zuverlässige Aussage über einen Track bzw. ein potentielles Kollisionsobjekt vor, wodurch die Reaktionszeit des Algorithmus verkürzt wird.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispiels unter Bezugnahme auf die zugehörigen Zeichnungen näher erläutert. Gleiche oder gleichwirkende Teile sind mit gleichen Bezugsziffern versehen. Dabei zeigen:
Fig. 1a ein Fahrzeug mit zwei Precrash-Sensoren, deren Erfassungsbereich durch fächerartig überlappende Messstrahlen gebildet wird, und
Fig. 1b das Fahrzeug der Fig. 1a, bei dem ein potentielles Kollisionsobjekt im Erfassungsbereich der Sensoren erscheint, sowie
Fig. 2 eine schematische Darstellung der wesentlichen Verarbeitungsschritte des erfindungsgemäßen Verfahrens.

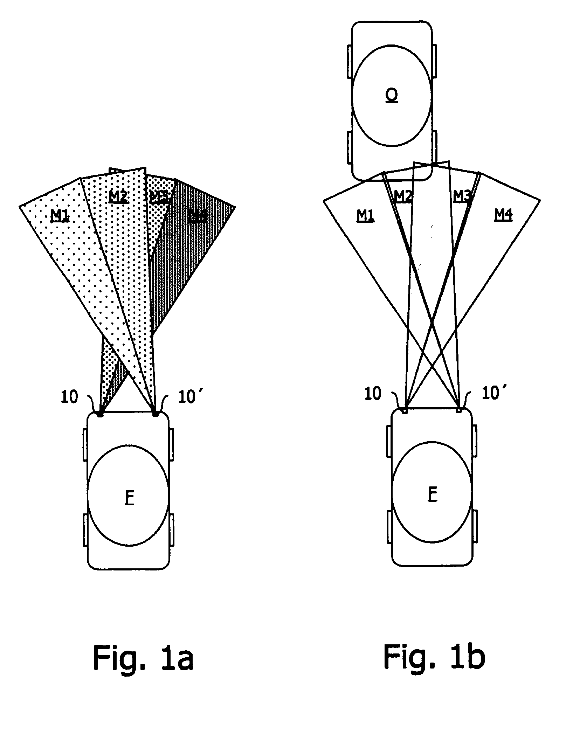

Fig. 1a zeigt ein Fahrzeug F mit zwei Precrash-Sensoren 10 und 10', deren Erfassungsbereich durch fächerartig überlappende Messstrahlen M1 - M4 gebildet wird. Die Sensoren 10, 10' sind einfache, preisgünstige Entfernungssensoren, die an der Vorderseite des Fahrzeugs F, z.B. an dessen Stoßstange, in dessen Scheinwerfern, am Kühlergrill o.Ä. integriert sind. Die Aufgabe des Algorithmus besteht darin, die Entfernungsmessungen schnell (Real-Time) und verlässlich zu verarbeiten, Objekte zu lokalisieren sowie deren Geschwindigkeitsvektor hinsichtlich des Fahrzeugs F und deren Crashrelevanz zu bestimmen. Die Crashrelevanz und die Crashparameterabschätzung werden in einer Vielzahl von precrash-bezogenen Rückhaltemitteln genutzt. Beispiele dafür sind die Bestimmung des Auslösezeitpunkts für Airbags unter Nutzung Annäherungsgeschwindigkeit, des Gurtstraffer, der Kniepolster usw. Typische preisgünstige Sensoren für diesen Zweck weisen eine einfache Messstrahlstruktur auf, mit festen Messstrahlen (kein Scanning), die einen Bereich bis zu 8 - 10 m vor dem Fahrzeug abdecken. Innerhalb des Messstrahls ist keine Winkelauflösung möglich.

Fig. 1b zeigt das Fahrzeug F der Fig. 1a, bei dem ein potentielles Kollisionsobjekt O im Erfassungsbereich der Sensoren 10, 10' erscheint. Das Objekt O wird dabei von den angrenzenden Messstrahlen M1 und M2 erfasst, deren Messungen z.B. anhand der Entfernungsinformation miteinander kombiniert werden. Das Objekt O wird auch im überlappenden Bereich der Messstrahlen M2 und M3 erfasst, deren Messungen segmentiert und trianguliert werden. Das Objekt O tritt in keinem einzelnen Messstrahl eines der Sensoren 10, 10' auf, womit auch keine isolierten Messungen zu betrachten sind. Die segmentierten und kombinierten Messungen werden in der Folge gruppiert und bilden das Objekt O ab, für das ein Track initiiert wird. Dazu werden Kriterien wie Objektposition, Annäherungsgeschwindigkeit usw herangezogen. Die gruppierten Messungen werden diesem Track zugeordnet und mit einem Status versehen. In diesem ersten Erfassungszyklus wäre dies der Status INITIAL, der auf Grund wohldefinierter Übergangsregeln im nächsten Erfassungszyklus schon CONFIRMED sein könnte. Tracks mit dem Status CONFIRMED werden zuerst verarbeitet, um deren Crashrelevanz zu beurteilen.

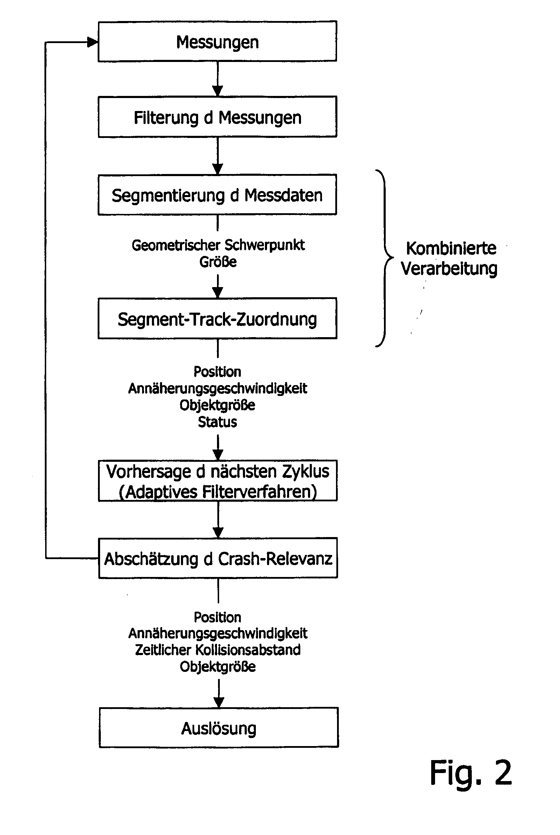

Fig. 2 zeigt eine schematische Darstellung der wesentlichen Verarbeitungsschritte des erfindungsgemäßen Verfahrens. Da die betrachteten Crash-Zeiten in der Regel im Bereich einiger Millisekunden liegen, zielt der Algorithmus darauf ab, die Gesamtverarbeitungszeit einerseits durch Verringern überflüssiger Verarbeitungsschritte durch das Ausschließen unerwünschter Messungen, und andererseits durch einfache Strukturierung der Zuordnungsoperationen der Messungen zu den Tracks zu minimieren.

Dazu werden die Messungen der Sensoren 10, 10' zunächst durchgeführt und in einem nächsten Schritt gefiltert. Die Filterung kann dabei eine Vorfilterung der Messungen nach Reichweite umfassen, womit nicht precrash-relevante Messungen ausgeschlossen werden. Der Algorithmus kann in diesem Schritt beispielsweise bei der Verwendung von LIDAR-Sensoren auf Grund der empfangenen Signalstärke Messungen ausschließen, die durch Nebelreflexionen hervorgerufen sind. Des weiteren können Messungen ausgefiltert werden, die auf temporäre Messausfälle zurückzuführen sind. Durch die Vorfilterung der Messungen wird der zu verarbeitende Datenumfang verkleinert und gleichzeitig auf das Wesentliche beschränkt. Damit steigt die Effizienz und Reaktionsgeschwindigkeit des Algorithmus.

Im nächsten Schritt werden überlappende Messungen trianguliert und segmentiert, und die derart segmentierten Messungen mit möglichen kombinierten und isolierten Messungen gruppiert. Für Messungen, die nicht in das Gatter eines existierenden Tracks fallen, wird ein neuer Track initiiert. Eine Track-Datenstruktur besteht dabei aus einer Schätzung der Objektposition (x, y) in jedem Zyklus, einer Schätzung der Annäherungsgeschwindigkeit (Vx, Vy), einer Schätzung der Objektgröße und crashrelevanter Information. Die Segmentierung und Zuordnung der Messdaten wird in diesem Schritt kombiniert (Search, Associate) durchgeführt, so dass sich eine Beschleunigung der Verarbeitung ergibt.

Im nächsten Schritt wird aus den vorliegenden Trackdaten eine Vorhersage für den nächsten Erfassungszyklus abgeleitet, z.B. wo und mit welcher möglichen Überlappung das Objekt dann erscheinen wird. Dazu wird ein adaptives Filterverfahren angewendet.

Für die derart vorhergesagten Tracks wird in einem nächsten Schritt eine Abschätzung der Crashrelevanz vorgenommen, wobei zB nur Tracks mit Status CONFIRMED betrachtet werden. Dadurch reduziert sich die zu verarbeitende Datenmenge ein weiteres Mal, was die Verarbeitung beschleunigt und damit die Reaktionszeit des Algorithmus verkürzt. Wird eine Crashrelevanz eines oder mehrerer Objekte für den nächsten Erfassungszyklus festgestellt, kommt es zur Auslösung der entsprechenden Insassenrückhaltemittel, ansonsten kehrt der Algorithmus in den Schritt der Messungsaufnahme zurück.

Bei Auslösung werden Trackinformationen wie Position, Annäherungsgeschwindigkeit, zeitlicher Kollisionsabstand immer an die relevanten Sicherheitssysteme übergeben, bei Überlappung auch der Überlappungsbereich. Unter Zugrundelegung dieser Angaben kann ein Precrash-Verhalten der Insassenrückhaltesysteme optimal gesteuert werden.

Der Algorithmus erhöht den Nutzwert einfacher, preiswerter Sensoren, die zum Realisieren einer Precrash-Funktionalität verwendet werden können. Zukünftige Funktionen können dabei die Bestimmung von Auslösezeitpunkten für Airbags, die Betätigung von Gurtstraffern usw umfassen. Ein derartiges Niedrigpreis-Sensorsystem kann, aufgewertet durch die hier vorgestellte Signalverarbeitung, auch in einer Vielzahl neuer Anwendungen auch mit anderen Sensortypen verbunden werden, z.B. Systemen zur Kollisionsabschwächung usw.

### Bezugszeichenliste

- 10, 10': Optischer Sensor
- F: Fahrzeug
- M1 - M4: Messungen
- O: Objekt

## Patentansprüche

1. Verfahren zum Steuern von Insassenrückhaltemitteln in einem Fahrzeug, mit wenigstens zwei Sensoren (10, 10') zum zyklischen Erfassen einer Fahrzeugumgebung, deren Messdaten zu Segmenten zusammenfassbar und potentiellen Kollisionsobjekten (O) zugeordnet sind, und bei dem Tracks für die Objekte (O) ermittelt werden können, die zum Steuern eines Precrash-Verhaltens der Insassenrückhaltemittel heranziehbar sind,
**dadurch gekennzeichnet,**
**dass** die Segmente aus Messungen überlappender Messstrahlen gebildet werden, die sich von einer Fahrzeugvorderseite ausgehend in etwa horizontal fächerförmig erstrecken, und in denen potentielle Kollisionsobjekte (O) festgestellt sind.

2. Verfahren nach Anspruch 1,
**dadurch gekennzeichnet,**
**dass** den Segmenten triangulierte Messungen von Sensoren (10, 10') zugeordnet werden, in deren überlappenden Messstrahlen potentielle Kollisionsobjekte (O) festgestellt sind.

3. Verfahren nach Anspruch 2,
**dadurch gekennzeichnet,**
**dass** Radialgeschwindigkeiten eines Objekts (O) zum Feststellen einer Triangulierbarkeit herangezogen werden.

4. Verfahren nach einem der vorstehenden Ansprüche,
**dadurch gekennzeichnet,**
**dass** die Segmente mit kombinierten Messungen einzelner Sensoren (10, 10') gruppiert werden, in deren angrenzenden Messstrahlen (M1 - M4) gemeinsame potentielle Kollisionsobjekte (O) festgestellt sind.

5. Verfahren nach Anspruch 4,
**dadurch gekennzeichnet,**
**dass** die Kombinationskriterien eine Entfernungsinformation, eine Radialgeschwindigkeit und/oder eine Messstrahlnummer umfassen.

6. Verfahren nach einem der vorstehenden Ansprüche,
**dadurch gekennzeichnet,**
**dass** die Segmente mit isolierten Messungen einzelner Sensoren (10, 10') gruppiert werden, in deren Messstrahlen (M1 - M4) einzelne potentielle Kollisionsobjekte (O) festgestellt sind.

7. Verfahren nach einem der vorstehenden Ansprüche,
**dadurch gekennzeichnet,**
**dass** die Gruppierungskriterien eine Objektposition, eine Annäherungsgeschwindigkeit, eine Objektgröße und/oder ein Strahlüberlappungsmuster umfassen.

8. Verfahren nach einem der vorstehenden Ansprüche,
**dadurch gekennzeichnet,**
**dass** ein Unsicherheitsbereich, der sich beim Bestimmen einer Objektposition ergibt, als potentielle Objektgröße angenommen wird.

9. Verfahren nach einem der vorstehenden Ansprüche,
**dadurch gekennzeichnet,**
**dass** die Tracks eine Annäherungsgeschwindigkeit zum Erkennen und Verfolgen statischer und dynamischer Objekte (O) umfassen.

10. Verfahren nach einem der vorstehenden Ansprüche,
**dadurch gekennzeichnet,**
**dass** eine Annäherungsgeschwindigkeit eines Objekts (O) aus wenigstens zwei seiner Radialgeschwindigkeiten bestimmt wird.

11. Verfahren nach einem der vorstehenden Ansprüche,
**dadurch gekennzeichnet,**
**dass** den Tracks ein Status zugeordnet werden kann, der deren weitere Verarbeitung bestimmt.

12. Verfahren nach Anspruch 11,
**dadurch gekennzeichnet,**
**dass** der Track mit einem Status CONFIRMED zuerst verarbeitet wird.

13. Verfahren nach Anspruch 11 oder 12,
**dadurch gekennzeichnet,**
**dass** eine Statusänderung wohldefinierten Übertragungsregeln folgt.

14. Verfahren nach einem der vorstehenden Ansprüche,
**dadurch gekennzeichnet,**
**dass** eine zukünftige Objektposition durch Anwendung adaptiver Filterverfahren bestimmt wird.

15. Verfahren nach einem der vorstehenden Ansprüche,
**dadurch gekennzeichnet,**
**dass** zum Steuern eines Pre-Crash-Verhaltens von Insassenrückhaltemitteln für jedes Objekt (O) Informationen bereitgestellt werden, die eine Annäherungsgeschwindigkeit, eine Objektposition, einen zeitlichen Kollisionsabstand, eine Objektgröße und/oder eine Überlappung umfassen.
